Europäisches Patentamt

European Patent Office

Office européen des brevets

(11) Veröffentlichungsnummer: **0 091 583**

**A1**

# (12) EUROPÄISCHE PATENTANMELDUNG

(21) Anmeldenummer: 83102916.0

(22) Anmeldetag: 24.03.83

(51) Int. Cl.³: **F 16 J 15/10**
**B 01 J 3/00**

(30) Priorität: 03.04.82 DE 3212530

(43) Veröffentlichungstag der Anmeldung:
19.10.83 Patentblatt 83/42

(84) Benannte Vertragsstaaten:
DE FR GB

(71) Anmelder: BASF Aktiengesellschaft
Carl-Bosch-Strasse 38
D-6700 Ludwigshafen(DE)

(72) Erfinder: Dorn, Ingo H., Dr.
Gartenstrasse 7
D-6701 Dannstadt-Schauernheim(DE)

(72) Erfinder: Wiedemann, Manfred
Pranckhstrasse 52
D-6700 Ludwigshafen(DE)

(54) Dichtungen für Flanschverbindungen mit grossen Durchmessern bei hohen Temperaturen und salzbadgekühlten Reaktoren.

(57) Die Dichtungen (1) sind mit Gummi-Asbest-Flachdichtungen (2) als hartem Kern und beidseitig auf die Gummi-Asbest-Flachdichtungen aufgebrachten Graphitauflagen (3) ausgeführt.

Mittels dieser Dichtungen (1) ist es möglich, Emissionen von luftfremden Stoffen an Flanschverbindungen bei salzbadgekühlten Reaktoren zu verhindern.

EP 0 091 583 A1

Croydon Printing Company Ltd.

BASF Aktiengesellschaft O.Z. 0050/35843

Dichtungen für Flanschverbindungen mit großen Durchmessern
bei hohen Temperaturen und salzbadgekühlten Reaktoren

Die Erfindung betrifft Dichtungen für Flanschverbindungen
mit großen Durchmessern bei hohen Temperaturen und salzbadgekühlten Reaktoren.

Bei salzbadgekühlten Reaktoren, beispielsweise bei Reaktoren zur Herstellung von Acrylsäure, werden die verschiedenartigsten Dichtungen zur Abdichtung der gasbeaufschlagten
Flanschverbindungen verwendet, wie beispielsweise Asbestdichtungen, metallische Dichtungen aus Kupfer-Nickel-Legierungen oder gekammerte Dichtungen mit Sperrgas und Klammerschrauben. Häufig ist es mit Hilfe dieser Dichtungen nicht
möglich, die Richtweite für zulässige Emissionen und
Imissionen an luftfremden Stoffen - gemäß der vom Gesetzgeber erlassenen Vorschrift TA-Luft - einzuhalten. So
werden heute vom Ministerium für Arbeit, Gesundheit und
Soziales des Landes NRW in einem Erlaß an die Gewerbeaufsichtsämter spezifische Emissionswerte von 0,02 g/hm
zugrunde gelegt. Die Abdichtungsprobleme werden bei salzbadgekühlten Reaktoren mit großen Flanschverbindungen
zusätzlich zu der richtigen Wahl der Dichtung noch durch
andere Faktoren vergrößert, wie beispielsweise bei der
Auslegung und Fertigung solcher Reaktoren.

Der Erfindung liegt daher die Aufgabe zugrunde, bei
Flanschverbindungen mit großen Durchmessern bei hohen
Temperaturen und salzbadgekühlten Reaktoren Dichtungen zu
verwenden, mit Hilfe derer die Richtwerte für Emissionen
von luftfremden Stoffen eingehalten bzw. unterschritten
werden.

Go/P

Diese Aufgabe wird erfindungsgemäß dadurch gelöst, daß die Dichtungen als Gummi-Asbest-Flachdichtungen als hartem Kern und beidseitig auf die Gummi-Asbest-Flachdichtungen aufgebrachten Graphitauflagen ausgeführt sind. Besonders gute Abdichtungsergebnisse werden erzielt, wenn als Graphitauflagen Graphitbänder mit einer Stärke von größer 0,3 mm verwendet werden.

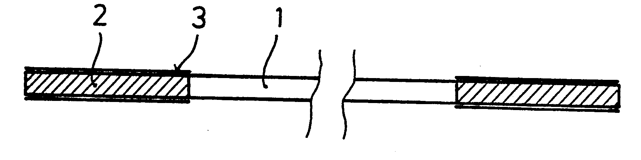

Ein Ausführungsbeispiel der Erfindung ist in der Zeichnung dargestellt und wird im folgenden näher beschrieben. Die Zeichnung zeigt einen Schnitt durch die Dichtung.

Die Flachdichtung 1 besteht aus hartem Gummi-Asbest-Material 2 (It-Material) und beidseitig aufgelegten 0,3 mm starken Graphitbändern 3. Die Graphitbänder übernehmen dabei die Funktion die Rauhtiefen der Flansche auszugleichen, und bewirken gleichzeitig, daß die Flanschflächen auf den Gummi-Asbest-Flachdichtungen gleiten, ohne dieselben zu zerstören. Dies ist entscheidend beim Aufheizen der Reaktoren und beim gegenseitigen Verschieben der Flansche untereinander, hervorgerufen durch unterschiedliche Temperaturen der Mantel- und Haubenflansche.

Die mit der Erfindung erzielten Vorteile bestehen insbesondere darin, Emissionen von luftfremden Stoffen an Flanschverbindungen bei salzbadgekühlten Reaktoren zu verhindern, auch dann, wenn die Flansche beispielsweise gekippt an Haube oder Mantel angeschweißt sind.

Patentansprüche

1. Dichtungen für Flanschverbindungen mit großen Durchmessern bei hohen Temperaturen und salzbadgekühlten Reaktoren, dadurch gekennzeichnet, daß die Dichtungen (1) als Gummi-Asbest-Flachdichtungen als hartem Kern (2) und beidseitig auf die Gummi-Asbest-Flachdichtungen aufgebrachten Graphitauflagen (3) ausgeführt sind.

2. Dichtungen nach Anspruch 1, dadurch gekennzeichnet, daß die Graphitauflagen (3) als Graphitbänder mit einer Stärke von größer 0,3 mm ausgeführt sind.

Zeichn.

2   3   1

## 0091583

### Europäisches Patentamt

### EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | E. SCHMID et al.: "Handbuch der Dichtungstechnik", 1981, Expert Verlag, Grafenau 1, Württ., DE. * Seite 46, Abschnitt 1.7 * | 1 | F 16 J 15/10<br>B 01 J 3/00 |
| X | DE-U-7 423 012 (SIGRI) * Absatz 1 * | 1 | |
| A | DESIGN ENGINEERING, November 1974, Seite 127, London, GB. "Graphite gasket gives safe sealing at high temperatures" | 1 | |
| A | DE-U-7 423 011 (SIGRI ELEKTROGRAPHIT) | 1 | |

RECHERCHIERTE SACHGEBIETE (Int. Cl. 3)

F 16 J
B 01 J
F 16 L

Der vorliegende Recherchenbericht wurde für alle Patentansprüche erstellt.

| Recherchenort<br>DEN HAAG | Abschlußdatum der Recherche<br>14-07-1983 | Prüfer<br>LEGER M.G.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82